(19) Europäisches Patentamt
European Patent Office
Office européen des brevets

(11) **EP 4 756 392 A1**

(12) **EUROPEAN PATENT APPLICATION**
published in accordance with Art. 153(4) EPC

(43) Date of publication:
**10.06.2026 Bulletin 2026/24**

(21) Application number: **24879416.6**

(22) Date of filing: **15.08.2024**

(51) International Patent Classification (IPC):
***G01L 5/165*** (2020.01)

(52) Cooperative Patent Classification (CPC):
**G01L 5/165**

(86) International application number:
**PCT/JP2024/029035**

(87) International publication number:
**WO 2025/083986 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.10.2023 JP 2023179039**

(71) Applicant: **Murata Manufacturing Co., Ltd.
Nagaokakyo-shi, Kyoto 617-8555 (JP)**

(72) Inventors:
• **KONNO, Akira
Nagaokakyo-shi, Kyoto 617-8555 (JP)**
• **KATO, Yoshitaka
Nagaokakyo-shi, Kyoto 617-8555 (JP)**
• **ASANO, Sho
Nagaokakyo-shi, Kyoto 617-8555 (JP)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **CAPACITIVE SENSOR**

(57)     A capacitive sensor that detects, on the basis of a change in electrostatic capacity of an electrode unit constituted by a first comb-tooth structure and a second comb-tooth structure facing the first comb-tooth structure, a force that acts in at least one of a first direction, a second direction intersecting the first direction, and a third direction intersecting both the first direction and the second direction includes: a first substrate layer (40) in which a thickness direction is the third direction, the first substrate layer (40) including a boss portion (40A) that receives a force that acts in the at least one direction and being deformed by bending due to a force that acts on the boss portion (40A); and a second substrate layer (30) in which a thickness direction is the third direction, the second substrate layer (30) including a mass portion (60) to which a force that acts in the at least one direction is transmitted from the boss portion (40A), a movable electrode that has the first comb-tooth structure and that is displaced in conjunction with the mass portion (60), and a fixed electrode that has the second comb-tooth structure.

FIG. 2

EP 4 756 392 A1

**Description**

Technical Field

The present invention relates to a capacitive sensor.

Background Art

A capacitive sensor detects inertia, pressure, and the like on the basis of a change in electrostatic capacity corresponding to a change in a gap between a substrate layer and a device layer. For example, the substrate layer includes an electrode, and the device layer includes a movable portion, a support portion that movably supports the movable portion, and a spring portion that elastically connects the movable portion and the support portion to each other. The capacitive sensor is manufactured by, for example, MEMS (Micro Electro Mechanical Systems) technology.

For example, Patent Document 1 discloses technology that detects tilting of a seesaw electrode, the tilting changing in response to a direction of a force acting on an upper surface of a projection, and that calculates, on the basis of a detected amount thereof, each of the forces acting on the upper surface of the projection in X, Y, and Z-axis directions.

Citation List

Patent Document

Patent Document 1: Japanese Unexamined Patent Application Publication No. 2017-152578

Summary of Invention

Technical Problem

In the device described in Patent Document 1, however, decreasing the thickness of a thin film portion provided so as to surround the projection is required to increase sensitivity in detection of tilting of the seesaw electrode, and an increase in the influence of process variations and a decrease in the mechanical strength of the thin film portion are problems.

The present invention has been made in consideration of such circumstances, and an object of the present invention is to provide a capacitive sensor capable of increasing sensitivity in detection of a force that acts from outside while ensuring mechanical strength.

Solution to Problem

A capacitive sensor according to one aspect of the present invention is a capacitive sensor that detects, based on a change in electrostatic capacity of an electrode unit constituted by a first comb-tooth structure and a second comb-tooth structure facing the first comb-tooth structure, a force that acts in at least one of a first direction, a second direction intersecting the first direction, and a third direction intersecting both the first direction and the second direction, the capacitive sensor including: a first substrate layer in which a thickness direction is the third direction, the first substrate layer including a boss portion that receives a force that acts in the at least one direction; and a second substrate layer in which a thickness direction is the third direction, the second substrate layer including a mass portion to which a force that acts in the at least one direction is transmitted from the boss portion, a movable electrode that has the first comb-tooth structure and that is displaced in conjunction with the mass portion, and a fixed electrode that has the second comb-tooth structure.

Advantageous Effects of Invention

According to the present invention, it is possible to increase sensitivity in detection of a force that acts from outside while ensuring mechanical strength.

Brief Description of Drawings

[Fig. 1] Fig. 1 is a sectional view of a capacitive sensor according to a first embodiment.

[Fig. 2] Fig. 2 is a plan view of a device layer.
[Fig. 3] Fig. 3 is a plan view of a first electrode unit.
[Fig. 4] Fig. 4 illustrates an overview of an electrode structure.
[Fig. 5] Fig. 5 illustrates an overview of an electrode structure.
[Fig. 6] Fig. 6 illustrates an overview of an electrode structure.
[Fig. 7] Fig. 7 illustrates characteristics of a first electrode unit according to the first embodiment.
[Fig. 8] Fig. 8 is a plan view of a third electrode unit according to the first embodiment.
[Fig. 9] Fig. 9 illustrates characteristics of the third electrode unit according to the first embodiment.
[Fig. 10] Fig. 10 is a plan view of a third electrode unit according to a second embodiment.
[Fig. 11] Fig. 11 illustrates characteristics of the third electrode unit according to the second embodiment.
[Fig. 12] Fig. 12 is a plan view of a first electrode unit according to another embodiment.
[Fig. 13] Fig. 13 is a plan view of a first electrode unit according to another embodiment.
[Fig. 14] Fig. 14 is a plan view of a first electrode unit according to another embodiment.

Description of Embodiments

<First Embodiment>

Hereinafter, a capacitive sensor 10 according to a first embodiment will be described with reference to the drawings. In the following, the drawings of embodiments are exemplary, dimensions and shapes of each component are schematic, and the technical scope of the present invention should not be understood to be limited to the embodiments.

Each configuration of the capacitive sensor 10 will be described below. In each of the drawings, an orthogonal coordinate system consisting of an X-axis, a Y-axis, and a Z-axis may be provided for convenience to clarify relationships among the drawings and to ease understanding of the positional relationships among members. Directions parallel to the X-axis, the Y-axis, and the Z-axis are referred to as the X-axis direction, the Y-axis direction, and the Z-axis direction, respectively. A plane defined by the X-axis and the Y-axis is referred to as the XY-plane. Note that, for convenience, description will be provided on the basis that a Z-axis positive direction (arrow direction) is considered as up or upward and the Z-axis negative direction (direction opposite to the arrow direction) is considered as down or downward. The orientation of each capacitive sensor is, however, not limited thereto.

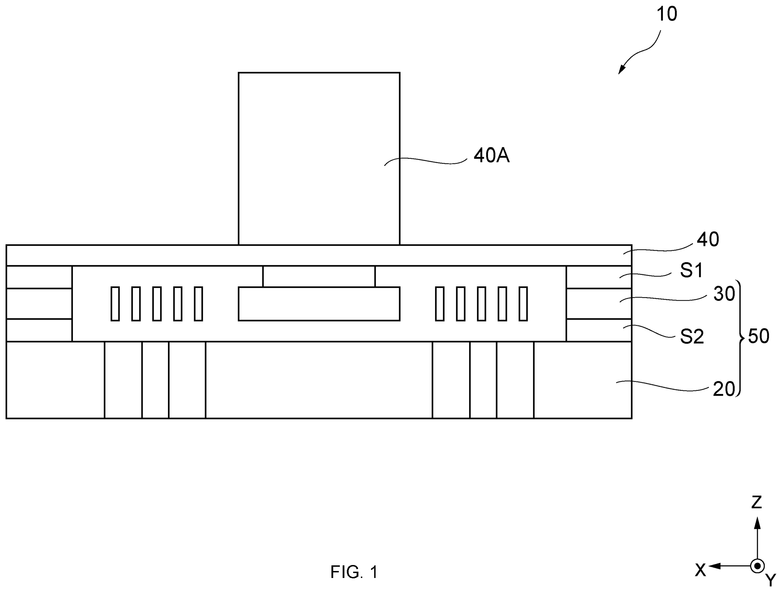

The capacitive sensor 10 is a type of force sensor that detects, on the basis of a change in the electrostatic capacity of an electrode unit, a force that acts in at least one of the X-axis direction, the Y-axis direction, and the Z-axis direction. As illustrated in Fig. 1, the capacitive sensor 10 includes a lower cover 20, a device layer 30, and an upper cover 40. The lower cover 20, the device layer 30, and the upper cover 40 are laminated in this order in the Z-axis direction. Hereinafter, the Z-axis direction in which the lower cover 20, the device layer 30, and the upper cover 40 are laminated is referred to as "thickness direction". The device layer 30 and the lower cover 20 are bonded to each other and constitute a MEMS substrate 50. The upper cover 40 is bonded to the device layer 30 of the MEMS substrate 50. In other words, the upper cover 40 is bonded to the lower cover 20 via the device layer 30. The lower cover 20 and the upper cover 40 face each other with the device layer 30 interposed therebetween in the thickness direction. The lower cover 20 and the upper cover 40 constitute a package structure forming a vibration space, in which the device layer 30 vibrates, in the inside of the package structure. The upper cover 40 is provided with a boss portion 40A projecting from the upper cover 40 in the thickness direction. The boss portion 40A includes a first portion projecting upward from the upper cover 40 and a second portion projecting downward from the upper cover 40. The first portion of the boss portion 40A receives forces that act from outside the capacitive sensor 10 in the X-axis direction, the Y-axis direction, and the Z-axis direction. The second portion of the boss portion 40A is located at a central portion (a lower portion of the boss portion 40A) of the upper cover 40 in plan view from above and has a leading end portion that is in contact with the device layer 30. The upper cover 40 has a thin film (diaphragm) structure and is distorted by a force applied to the first portion of the boss portion 40A, and the second portion of the boss portion 40A is displaced in a direction opposite to a direction in which the force is applied to the first portion of the boss portion 40A and causes the force that has acted on the boss portion 40A from outside the capacitive sensor 10 to be transmitted to the device layer 30. The upper cover 40 corresponds to one example of a first substrate layer that is deformed by bending due to a force that acts on the boss portion 40A.

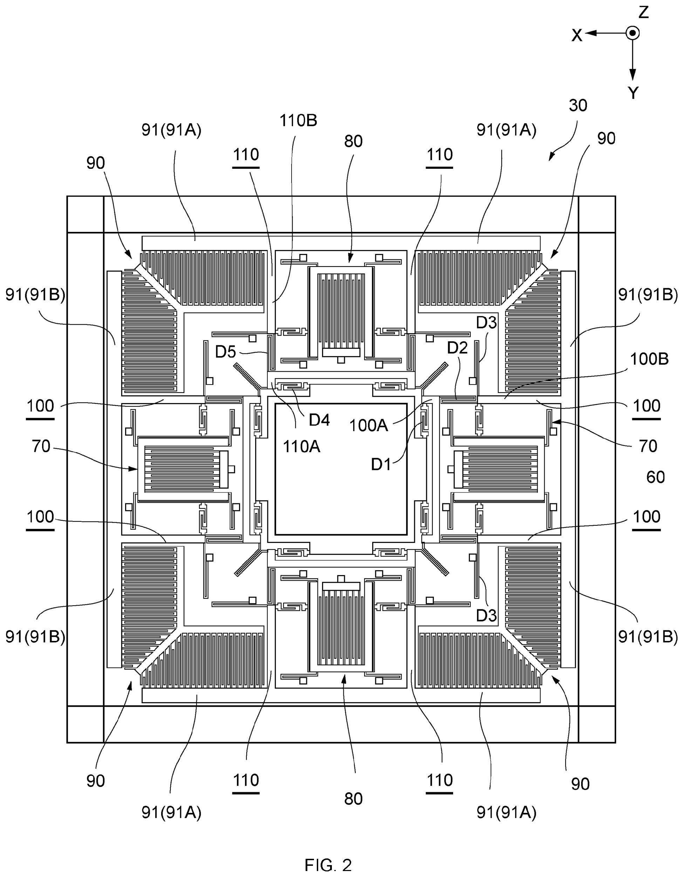

As illustrated in Fig. 2, the device layer 30 includes a mass portion 60, a first electrode unit 70, a second electrode unit 80, and a third electrode unit 90. A spacer S1 is interposed between the device layer 30 and the upper cover 40, a spacer S2 is interposed between the device layer 30 and the lower cover 20, and a movable range for the device layer 30 to be displaced in the X-axis direction, the Y-axis direction, and the Z-axis direction due to a force transmitted to the device layer 30 from the boss portion 40A is ensured between the device layer 30 and the upper cover 40 and between the device layer 30 and the lower cover 20. The device layer 30 corresponds to one example of a second substrate layer.

The mass portion 60 is provided at a central position of the device layer 30 in plan view, and a force from the boss portion 40A of the upper cover 40 is transmitted to the mass portion 60.

Four first beam portions 100 extending in the X-axis direction are provided between the mass portion 60 and an electrode holding portion 91 of the third electrode unit 90. Each first beam portion 100 includes a first unit 100A that is coupled to an edge portion of the mass portion 60 in the X-axis direction via a spring D1 and a second unit 100B that is coupled to the first unit 100A via a spring D2. The spring D1 is one example of a third elastic portion and couples the mass portion 60 and the first unit 100A in a form in which displacement in the X-axis direction and the Y-axis direction is restricted and in which rotation about the Y-axis that extends in an XY-plane extending in the X-axis direction and the Y-axis direction is allowed. The spring D2 is one example of a first elastic portion and couples the first unit 100A and the second unit 100B in a form in which displacement in the X-axis direction is restricted and in which displacement in the Y-axis direction is allowed. The second unit 100B is held by the lower cover 20 via a spring D3. The spring D3 has one end that is coupled to the second unit 100B and another end that is coupled to the lower cover 20. The spring D3 couples the second unit 100B and the lower cover 20 in a form in which displacement in the X-axis direction is allowed and in which rotation with the Y-axis as a rotation axis is allowed while displacement in the Y-axis direction is restricted.

Two second beam portions 110 extending in the Y-axis direction are provided between the mass portion 60 and the electrode holding portion 91 of the third electrode unit 90. Each second beam portion 110 includes a first unit 110A that is coupled to an edge portion of the mass portion 60 in the Y-axis direction via a spring D4 and a second unit 110B that is coupled to the first unit 110A via a spring D5. The spring D4 is one example of the third elastic portion and couples the mass portion 60 and the first unit 110A in a form in which displacement in the X-axis direction and the Y-axis direction is restricted and in which rotation about the X-axis that extends in an XY-plane extending in the X-axis direction and the Y-axis direction is allowed. The spring D5 is one example of a second elastic portion and couples the first unit 110A and the second unit 110B in a form in which displacement in the Y-axis direction is restricted and in which displacement in the X-axis direction is allowed.

Among the first electrode units 70 provided on two sides in the X-axis direction with respect to the mass portion 60 and the second electrode units 80 provided on two sides in the Y-axis direction with respect to the mass portion 60, adjacent electrode units are coupled via a spring D6. The spring D6 is one example of a coupling portion and interrelates displacements of adjacent electrodes in the X-axis direction and the Y-axis direction with each other while allowing translation-direction displacement of each of the adjacent electrode units in the X-axis direction and the Y-axis direction.

Next, a configuration of the first electrode unit 70 will be described. The first electrode units 70 provided on two sides in the X-axis direction with respect to the mass portion 60 and the second electrode units 80 provided on two sides in the Y-axis direction with respect to the mass portion 60 each have a substantially common configuration with the first electrode unit 70. Therefore, in the following description, the first electrode unit 70 provided on one side (the negative direction side in the Y-axis direction) in the X-axis direction with respect to the mass portion 60 will be described as an example, and description of the first electrode unit 70 provided on the other side (the positive direction side in the X-axis direction) in the X-axis direction with respect to the mass portion 60 and the second electrode units 80 provided on two sides in the Y-axis direction with respect to the mass portion 60 will be omitted.

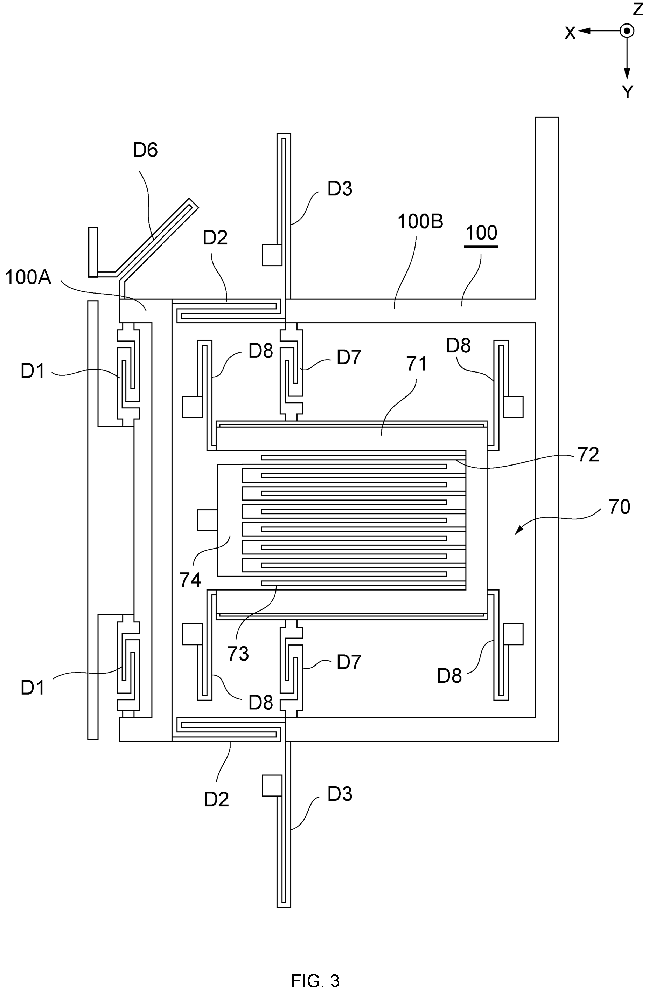

As illustrated in Fig. 3, the first electrode unit 70 is provided on each of two sides in the X-axis direction with respect to the mass portion 60 and includes an electrode holding portion 71 that is coupled to each of two of the first beam portions 100 via the spring D7, a movable electrode 72 that is held by the electrode holding portion 71, and a fixed electrode 73 that is disposed to face the movable electrode 72. The fixed electrode 73 is held by an electrode holding portion 74 fixed to the device layer 30. The spring D7 is one example of the third elastic portion and couples the second unit 100B of the first beam portion 100 and the electrode holding portion 91 in a form in which displacement in the X-axis direction and the Y-axis direction is restricted and in which rotation about the Y-axis that extends in an XY-plane extending in the X-axis direction and the Y-axis direction is allowed. The fixed electrode 73 has a second comb-tooth structure including, as a comb tooth, each of a plurality of plate electrodes extending in parallel in the X-axis direction. The movable electrode 72 has a first comb-tooth structure including, as a comb tooth, each of a plurality of plate electrodes extending in the X-axis direction. A space between the comb teeth in the movable electrode 72 and a space between the comb teeth in the fixed electrode 73 are set to be the same, and each comb tooth in the movable electrode 72 and each comb tooth in the fixed electrode 73 are alternately disposed to be spaced from each other in the Y-axis direction. The electrode holding portion 71 is held by the lower cover 20 via four springs 75. Each of the four springs 75 has one end that is coupled to the electrode holding portion 71 and another end that is coupled to the lower cover 20. Each of the four springs 75 couples the electrode holding portion 71 and the lower cover 20 in a form in which displacement in the Y-axis direction is restricted while displacement in the X-axis direction is allowed. Consequently, the translational motion of the electrode holding portion 71 in the X-axis direction is allowed.

Thus, when the mass portion 60 is displaced in the X-axis direction, a driving force associated with the displacement of the mass portion 60 is transmitted to the second unit 100B of the first beam portion 100 via the spring D1, the first unit 100A of the first beam portion 100, and the spring D2, and the second unit 100B of the first beam portion 100 is displaced in the X-axis direction. In addition, a driving force associated with the displacement of the second unit 100B of the first beam portion 100 is transmitted to the electrode holding portion 71 via the spring D7, and the facing area between each comb tooth of the movable electrode 72 and each comb tooth of the fixed electrode 73 in the Y-axis direction changes in response to displacement of the electrode holding portion 71 in the X-axis direction and changes electrostatic capacity between the movable electrode 72 and the fixed electrode 73. In addition, an electric potential signal indicating this change in electrostatic capacity is output from the movable electrode 72 and the fixed electrode 73 to an external controller, and displacement of the mass portion 60 in the X-axis direction is thereby detected.

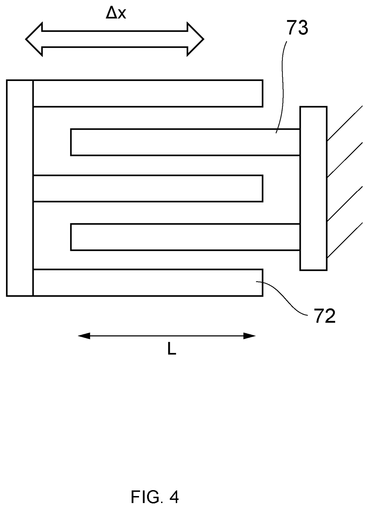

Specifically, when the comb teeth of the movable electrode 72 and the comb teeth of the fixed electrode 73 extend in the X-axis direction as illustrated in Fig. 4, a change amount $\Delta C$ of electrostatic capacity between the movable electrode 72 and the fixed electrode 73 is expressed by Equation (1) below. In this example, the facing area between each comb tooth of the movable electrode 72 and each comb tooth of the fixed electrode 73 in the Y-axis direction changes in response to displacement of the movable electrode 72 in the X-axis direction.

[Equation 1]

$$\Delta C = \frac{\epsilon N (L + 2\Delta x) h}{d}$$

Here, $\Delta x$ represents the amount of displacement of the movable electrode 72 in the X-axis direction, $\varepsilon$ represents the dielectric constant, h represents the thickness of the movable electrode 72, d represents the gap between the movable electrode 72 and the fixed electrode 73, L represents the length of comb teeth facing each other, and N represents the number of comb teeth.

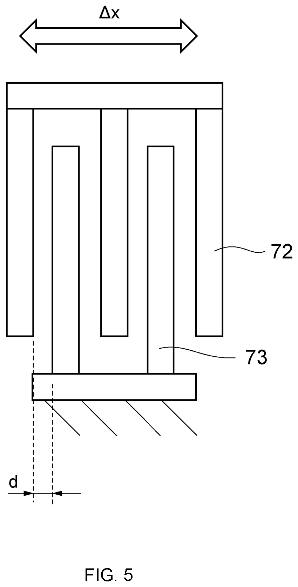

As illustrated in Fig. 5, the comb teeth of the movable electrode 72 and the comb teeth of the fixed electrode 73 may extend in the Y-axis direction. In this case, the change amount $\Delta C$ of electrostatic capacity between the movable electrode 72 and the fixed electrode 73 is expressed by Equation (2) below. In this example, even when the movable electrode 72 is displaced in the X-axis direction, the facing area between each comb tooth of the movable electrode 72 and each comb tooth of the fixed electrode 73 in the Y-axis direction does not change.

[Equation 2]

$$\Delta C = \frac{\epsilon N L h}{d - \Delta x}$$

Here, $\Delta x$ represents the amount of displacement of the movable electrode 72 in the X-axis direction, $\varepsilon$ represents the dielectric constant, h represents the thickness of the movable electrode 72, d represents the gap between the movable electrode 72 and the fixed electrode 73, L represents the length of comb teeth facing each other, and N represents the number of comb teeth.

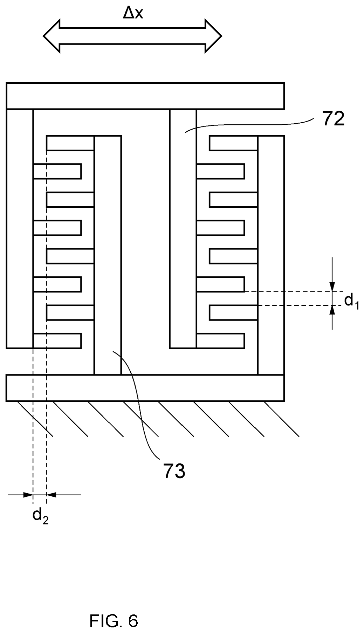

As illustrated in Fig. 6, in each of the movable electrode 72 and the fixed electrode 73, an electrode portion extending in the Y-axis direction may serve as a trunk, and a plurality of electrode portions extending in the X-axis direction may extend as comb teeth from the trunk. In this case, the change amount $\Delta C$ of electrostatic capacity between the movable electrode 72 and the fixed electrode 73 is expressed by Equation (3) below. In this example, the facing area between each comb tooth of the movable electrode 72 and each comb tooth of the fixed electrode 73 in the Y-axis direction changes in response to displacement of the movable electrode 72 in the X-axis direction.

[Equation 3]

$$\Delta C = \frac{\epsilon N_1 (L_1 + 2\Delta x) h}{d_1} + \frac{\epsilon N_2 L_2 h}{d_2 - \Delta x}$$

Here, $\Delta x$ represents the amount of displacement of the movable electrode 72 in the X-axis direction, $\varepsilon$ represents

the dielectric constant, h represents the thickness of the movable electrode 72, d1 and d2 each represent the gap between the movable electrode 72 and the fixed electrode 73, L1 and L2 each represent the length of comb teeth facing each other, and N1 and N2 each represent the number of comb teeth.

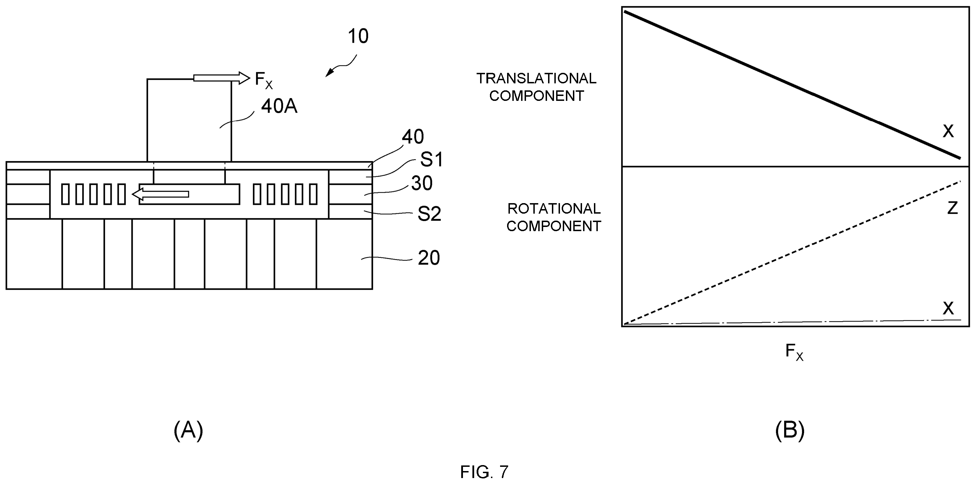

Fig. 7(A) and Fig. 7(B) illustrate one example of simulation results obtained by FEM (Finite Element Method) for a translational component in the X-axis direction, a rotational component in the X-axis direction, and a rotational component in the Z-axis direction in the mass portion 60 when a force Fx is applied to the boss portion 40A in the X-axis direction. In the example illustrated in Fig. 7(A) and Fig. 7(B), the translational component in the X-axis direction and the rotational component in the Z-axis direction in the mass portion 60 each have a linear relationship with the magnitude of the force Fx applied to the boss portion 40A in the X-axis direction, and the rotational component in the X-axis direction is constant. Although illustration is omitted, according to simulation results similarly obtained by FEM (Finite Element Method), the electrostatic capacity of the first electrode unit 70 has a linear relationship with the magnitude of the force Fx when the force Fx is applied to the boss portion 40A in the X-axis direction, and the electrostatic capacity of each of the second electrode unit 80 and the third electrode unit 90 is, however, constant.

Next, a configuration of the third electrode unit 90 will be described.

The third electrode unit 90 is provided at each of four corner portions of the device layer 30.

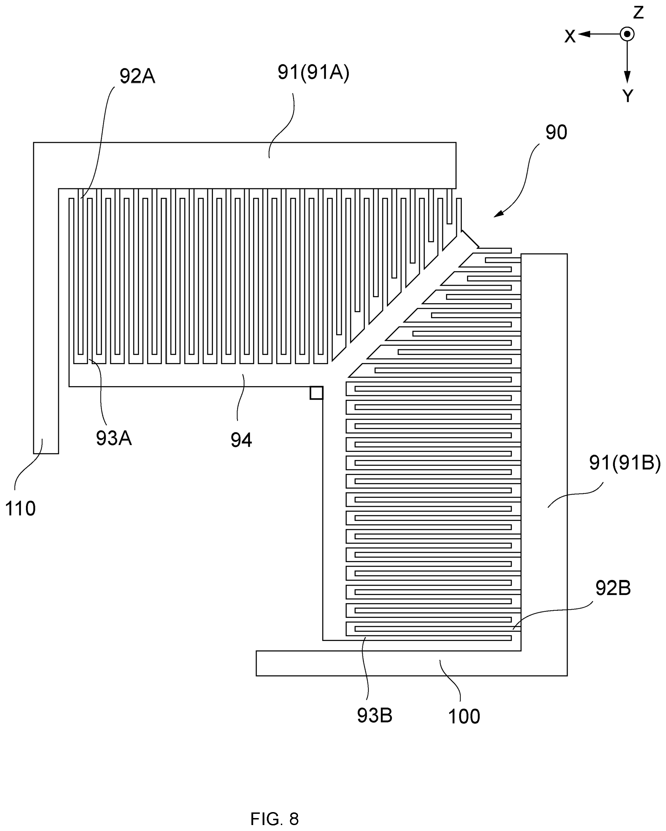

As illustrated in Fig. 8, the third electrode unit 90 includes the electrode holding portion 91, movable electrodes 92A and 92B held by the electrode holding portion 91, and fixed electrodes 93A and 93B disposed to face the movable electrodes 92A and 92B, respectively.

The electrode holding portion 91 has an L-shape in plan view and includes a first electrode holding portion 91A that extends in the X-axis direction and a second electrode holding portion 91B that extends in the Y-axis direction.

The first electrode holding portion 91A is coupled to the mass portion 60 via the second beam portions 110 and holds the movable electrode 92A. The movable electrode 92A has a comb-tooth structure including, as a comb tooth, each of a plurality of plate electrodes extending in parallel in the Y-axis direction. The fixed electrode 93A is held by an electrode holding portion 94 fixed to the device layer 30. The fixed electrode 93A has a comb-tooth structure including, as a comb tooth, each of a plurality of plate electrodes extending in the Y-axis direction. A space between the comb teeth in the movable electrode 92A and a space between the comb teeth in the fixed electrode 93A are set to be the same, and each comb tooth in the movable electrode 92A and each comb tooth in the fixed electrode 93A are alternately disposed to be spaced from each other in the X-axis direction.

The second electrode holding portion 91B is coupled to the mass portion 60 via the first beam portion 100 and holds the movable electrode 92B. The movable electrode 92B has a comb-tooth structure including, as a comb tooth, each of a plurality of plate electrodes extending in the X-axis direction. The fixed electrode 93B is held by the electrode holding portion 94 that is common with the fixed electrode 93A. The movable electrode 92B has a comb-tooth structure including, as a comb tooth, each of a plurality of plate electrodes extending in the Y-axis direction. A space between the comb teeth in the movable electrode 92B and a space between the comb teeth in the fixed electrode 93B are set to be the same, and each comb tooth in the movable electrode 92B and each comb tooth in the fixed electrode 93B are alternately disposed to be spaced from each other in the Y-axis direction.

Thus, when the mass portion 60 is displaced in the Z-axis direction, the driving force associated with the displacement of the mass portion 60 is converted into rotation about the X-axis with the spring D4 serving as a rotary shaft, and the first unit 110A of the second beam portion 110 is displaced to be depressed in the Z-axis direction. In addition, in conjunction with the displacement of the first unit 110A of the second beam portion 110, the second unit 110B of the second beam portion 110 rotates about the X-axis with the spring D3 serving as a rotary shaft. In addition, in conjunction with the rotation of the second unit 110B of the second beam portion 110 about the X-axis, the first electrode holding portion 91A is displaced to be raised in the Z-axis direction. In addition, the driving force associated with the displacement of the mass portion 60 is converted into rotation about the Y-axis with the spring D1 serving as a rotary shaft, and the first unit 100A of the first beam portion 100 is displaced to be depressed in the Z-axis direction. In addition, in conjunction with the displacement of the first unit 100A of the first beam portion 100, the second unit 100B of the first beam portion 100 rotates about the Y-axis with the spring D3 serving as a rotary shaft. In addition, in conjunction with the rotation of the second unit 100B of the first beam portion 100 about the Y-axis, the second electrode holding portion 91B is displaced to be raised in the Z-axis direction. Then, in response to transmission of a driving force to the first electrode holding portion 91A and the second electrode holding portion 91B, each of the first electrode holding portion 91A and the second electrode holding portion 91B is displaced in the Z-axis direction. In addition, in response to the displacement of the first electrode holding portion 91A in the Z-axis direction, the facing area between each comb tooth of the movable electrode 92A and each comb tooth of the fixed electrode 93A changes, and the electrostatic capacity between the movable electrode 92A and the fixed electrode 93A changes. In addition, in response to the displacement of the second electrode holding portion 91B in the Z-axis direction, the facing area between each comb tooth of the movable electrode 92B and each comb tooth of the fixed electrode 93B changes, and the electrostatic capacity between the movable electrode 92B and the fixed electrode 93B changes. Electric potential signals indicating these changes in the electrostatic capacity are output from the movable electrodes 92A and 92B and the fixed electrodes 93A and 93B to an external controller, and displacement of the mass portion 60 in the Z-axis direction is thereby detected.

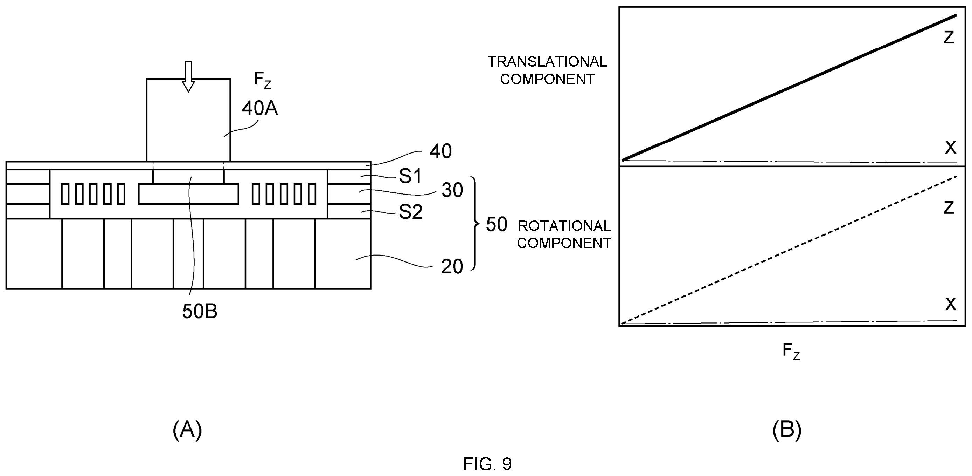

Fig. 9(A) and Fig. 9(B) illustrate one example of simulation results obtained by FEM (Finite Element Method) for the translational component in the X-axis direction, the rotational component in the X-axis direction, the rotational component in the Z-axis direction, and the rotational component in the Z-axis direction in the movable electrode 92 when a force Fz is applied to the boss portion 40A in the Z-axis direction. In the example illustrated in Fig. 9(A) and Fig. 9(B), the translational component in the Z-axis direction and the rotational component in the Z-axis direction in the mass portion 60 each have a linear relationship with the magnitude of the force FZ applied to the boss portion 40A in the Z-axis direction, and the translational component in the X-axis direction and the rotational component in the X-axis direction are constant. Although illustration is omitted, according to simulation results similarly obtained by FEM (Finite Element Method), the electrostatic capacity of the third electrode unit 90 has a linear relationship with the magnitude of the force Fz when the force Fz is applied to the boss portion 40A in the Z-axis direction, and the electrostatic capacity of each of the first electrode unit 70 and the second electrode unit 80 is, however, constant.

Next, an operation of the capacitive sensor 10 according to the first embodiment will be described.

In the present embodiment, when a force acts on the boss portion 40A, the force is transmitted from the boss portion 40A to the mass portion 60, and the movable electrode of the electrode unit 70, 80, or 90 corresponding to a direction in which the force acts is displaced and thereby changes the electrostatic capacity of the electrode unit 70, 80, or 90. In this case, in each of the electrode units 70, 80, and 90, due to the movable electrodes 72, 92A, and 92B and the fixed electrodes 73, 93A, and 93B each having the comb-tooth structure, the areas in each of which the movable electrodes 72, 92A, and 92B and the fixed electrodes 73, 93A, and 93B face each other, respectively, are large, the space between each of the movable electrodes 72, 92A, and 92B and a corresponding one of the fixed electrodes 73, 93A, and 93B is narrowed, and sensitivity of the electrostatic capacity of each of the electrode units 70, 80, and 90 in response to the displacement of a corresponding one of the movable electrodes 72, 92A, and 92B is increased. As a result, it is possible, without reducing the thickness of the upper cover 40, to increase the sensitivity of the electrostatic capacity of each of the electrode units 70, 80, and 90, and thus, it is possible to ensure the mechanical strength of the upper cover 40. That is, it is possible to increase sensitivity in detection of a force that acts from outside while ensuring the mechanical strength.

In general, when the gap between the upper cover 40 and the fixed electrode 73, 93A, or 93B is reduced to increase the sensitivity of the capacitive sensor 10, the maximum tolerable displacement amount of the boss portion 40A is limited. Therefore, the sensitivity and the dynamic range of the capacitive sensor 10 have a trade-off relationship. In this regard, in the present embodiment, the comb-tooth structures of the movable electrodes 72, 92A, and 92B and the comb-tooth structures of the fixed electrodes 73, 93A, and 93B in the electrode units 70, 80, and 90 extend in a displacement direction of the mass portion 60. Therefore, it is possible to increase sensitivity of the electrostatic capacity of each of the electrode units 70, 80, and 90 in response to the displacement of the mass portion 60 while maintaining the gap between each of the movable electrodes 72, 92A, and 92B and a corresponding one of the fixed electrodes 73, 93A, and 93B. As a result, it is possible to address both the sensitivity and the dynamic range of the capacitive sensor 10. In addition, when a structure in which the electrostatic capacity changes linearly in response to the displacement of the boss portion 40A as described above is used, it is also possible, even when the magnitude of a force that acts on the boss portion 40A is increased, to maintain the linearity between the magnitude of the acting force and the electrostatic capacity of the capacitive sensor 10.

In the capacitive sensor 10, adjacent electrode units among the first electrode units 70 that are provided on two sides in the X-axis direction with respect to the mass portion 60 and the second electrode units 80 that are provided on two sides in the Y-axis direction with respect to the mass portion 60 are coupled via the spring D6 as one example of the coupling portion. Therefore, when the translational motion of the mass portion 60 is performed in the X-axis direction, the first units 110A of the second beam portions 110 provided on the two sides in the Y-axis direction with respect to the mass portion 60 can follow the mass portion 60 and perform translation in the X-axis direction without rotating in an XY-plane.

<Second Embodiment>

Next, the capacitive sensor 10 according to a second embodiment will be described with reference to the drawings. For the second and subsequent embodiments, description of matters common with the first embodiment will be omitted, and only differences from the first embodiment will be described. In particular, similar effects obtained by similar configurations will not be mentioned one by one for each embodiment.

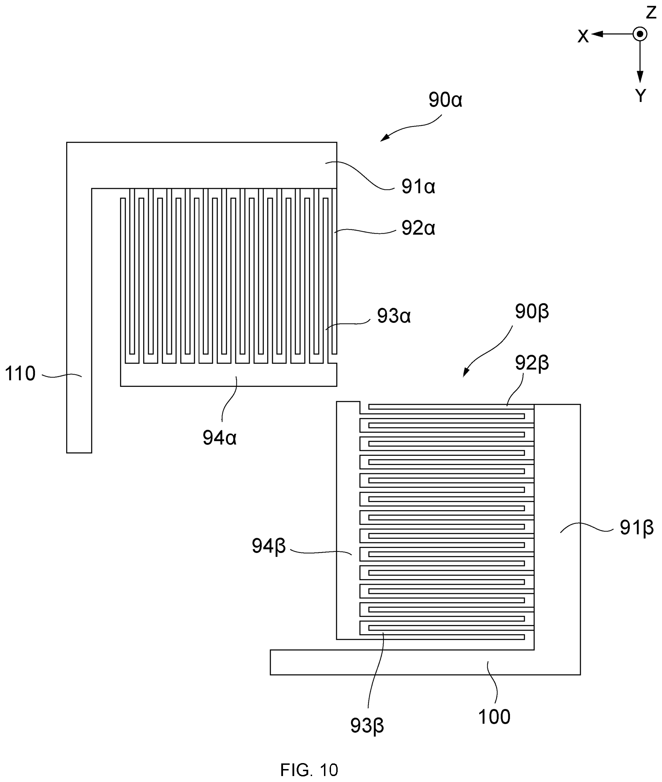

As illustrated in Fig. 10, the third electrode unit 90 is divided into a plurality of electrode units 90α and 90β.

The electrode unit 90α includes a movable electrode 92α that is held by an electrode holding portion 91α extending in the X-axis direction and a fixed electrode 93α that is disposed to face the movable electrode 92α. The movable electrode 92α has a comb-tooth structure including, as a comb tooth, each of a plurality of plate electrodes extending in parallel in the Y-axis direction. The fixed electrode 93α is held by an electrode holding portion 94α that is fixed to the device layer 30. The fixed electrode 93α has a comb-tooth structure including, as a comb tooth, each of a plurality of plate electrodes extending in the Y-axis direction. A space between the comb teeth in the movable electrode 92α and a space between the comb teeth in the fixed electrode 93α are set to be the same, and each comb tooth in the movable electrode 92α and each comb tooth in the fixed electrode 93α are alternately disposed to be spaced from each other in the X-axis direction.

The electrode unit 90β includes a movable electrode 92β that is held by an electrode holding portion 91β extending in the Y-axis direction and a fixed electrode 93β that is disposed to face the movable electrode 92β. The electrode holding portion 91β is coupled to the mass portion 60 via the second beam portion 110. The movable electrode 92β has a comb-tooth structure including, as a comb tooth, each of a plurality of plate electrodes extending in parallel in the X-axis direction. The fixed electrode 93β has a first comb-tooth structure including, as a comb tooth, each of a plurality of plate electrodes extending in the X-axis direction. The fixed electrode 93β is held by an electrode holding portion 94β that is fixed to the device layer 30. A space between the comb teeth in the movable electrode 92β and a space between the comb teeth in the fixed electrode 93β are set to be the same, and each comb tooth in the movable electrode 92β and each comb tooth in the fixed electrode 93β are alternately disposed to be spaced from each other in the Y-axis direction.

When the mass portion 60 is displaced in the Z-axis direction, a driving force associated with the displacement of the mass portion 60 is transmitted to the electrode holding portion 91α via the second beam portion 110, and the electrode holding portion 91α is displaced in the Z-axis direction. In addition, in response to the displacement of the electrode holding portion 91α in the Z-axis direction, the facing area between each comb tooth of the movable electrode 92α and each comb tooth of the fixed electrode 93α changes, and the electrostatic capacity between the movable electrode 92α and the fixed electrode 93α changes. In addition, the driving force associated with the displacement of the mass portion 60 is transmitted to the electrode holding portion 91β via the first beam portion 100, and the electrode holding portion 91β is displaced in the Z-axis direction. Then, in response to the displacement of the electrode holding portion 91β in the Z-axis direction, the facing area between each comb tooth of the movable electrode 92β and each comb tooth of the fixed electrode 93β changes, and the electrostatic capacity between the movable electrode 92β and the fixed electrode 93β changes. Electric potential signals indicating these changes in the electrostatic capacity are output from the movable electrodes 92α and 92β and the fixed electrodes 93α and 93β to an external controller, and displacement of the mass portion 60 in the Z-axis direction is thereby detected.

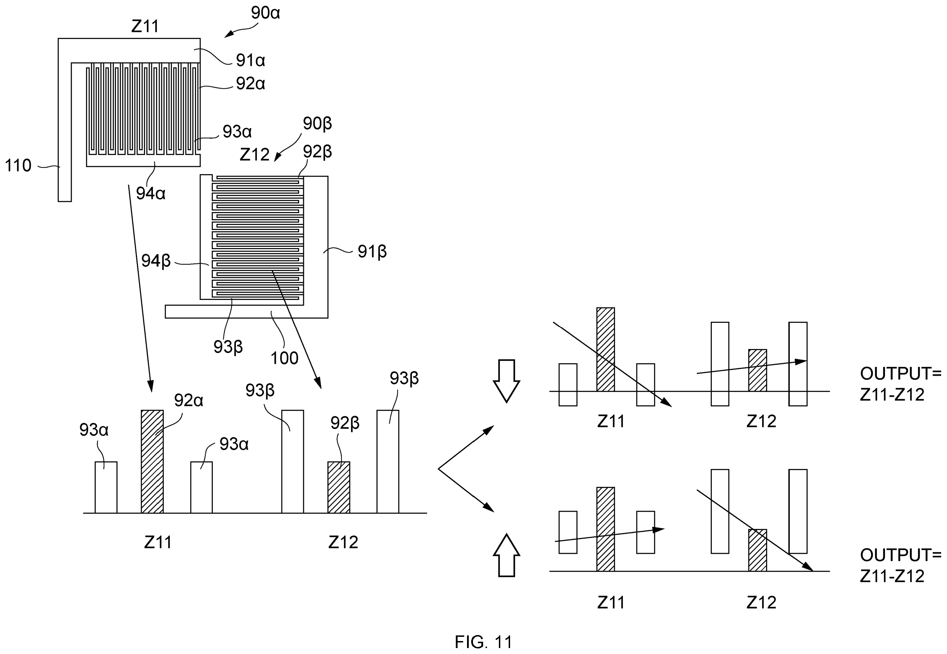

In addition, as illustrated in Fig. 11, configurations of the movable electrode 92α and the fixed electrode 93α in the electrode unit 90α and configurations of the movable electrode 92β and the fixed electrode 93β in the electrode unit 90β may be made different from each other in the present embodiment. In the example illustrated in Fig. 11, the thickness of the movable electrode 92α in the Z-axis direction is larger than the thickness of the fixed electrode 93α in the Z-axis direction in the electrode unit 90α, and the thickness of the movable electrode 92β in the Z-axis direction is smaller than the thickness of the fixed electrode 93β in the Z-axis direction in the electrode unit 90β. In this case, when a difference in the thickness in the Z-axis direction is provided between the movable electrode 92α and the fixed electrode 93α and between the movable electrode 92β and the fixed electrode 93β, arrangement of the movable electrode 92α and the fixed electrode 93α and arrangement of the movable electrode 92β and the fixed electrode 93β may be any of top-alignment, center-alignment, and bottom-alignment in the Z-axis direction. In addition, the arrangement in the electrode unit 90α and the arrangement in the electrode unit 90β may be unified between the two electrode units as top-alignment, center-alignment, or bottom-alignment in the Z-axis direction. Alternatively, the arrangement of the movable electrode 92α and the fixed electrode 93α in the Z-axis direction in the electrode unit 90α and the arrangement of the movable electrode 92β and the fixed electrode 93β in the Z-axis direction in the electrode unit 90β may be made different from each other by, for example, employing top-alignment in the Z-axis direction in one of the electrode unit 90α and the electrode unit 90β and employing bottom-alignment in the other one of the electrode unit 90α and the electrode unit 90β. When, in response to the displacement of the mass portion 60 in the Z-axis direction, the movable electrode 92β is displaced in conjunction with the mass portion 60 in the Z-axis direction with respect to the fixed electrode 93β, the change amount of the facing area between the movable electrode 92α and the fixed electrode 93α in the electrode unit 90α and the change amount of the facing area between the movable electrode 92β and the fixed electrode 93β in the electrode unit 90β are different from each other, and the change amount of electrostatic capacity in the electrode unit 90α and the change amount of electrostatic capacity in the electrode unit 90β are also different from each other. Note that the electrostatic capacity is changed not only by a change in the facing area between the movable electrode 92α or 92β and the fixed electrode 93α or 93β but also by, for example, an effect of fringing of an electric field line between the movable electrodes 92α or 92β and the fixed electrode 93α or 93β. Therefore, an electric potential signal indicating a change in the electrostatic capacity is individually output from the movable electrode 92α and the fixed electrode 93α and from the movable electrode 92β and the fixed electrode 93β to an external controller, and a difference in output values thereof is calculated. Consequently, the displacement of the mass portion 60 in the Z-axis direction is detected more precisely and specifically.

The aforementioned embodiment also can be carried out in the following forms.

In the aforementioned embodiment, the spring D1, the spring D2, the spring D4, the spring D5, and the spring D7 may be each provided at a respective one of a plurality of positions in or on the device layer 30 and may be configured to have different thicknesses from each other.

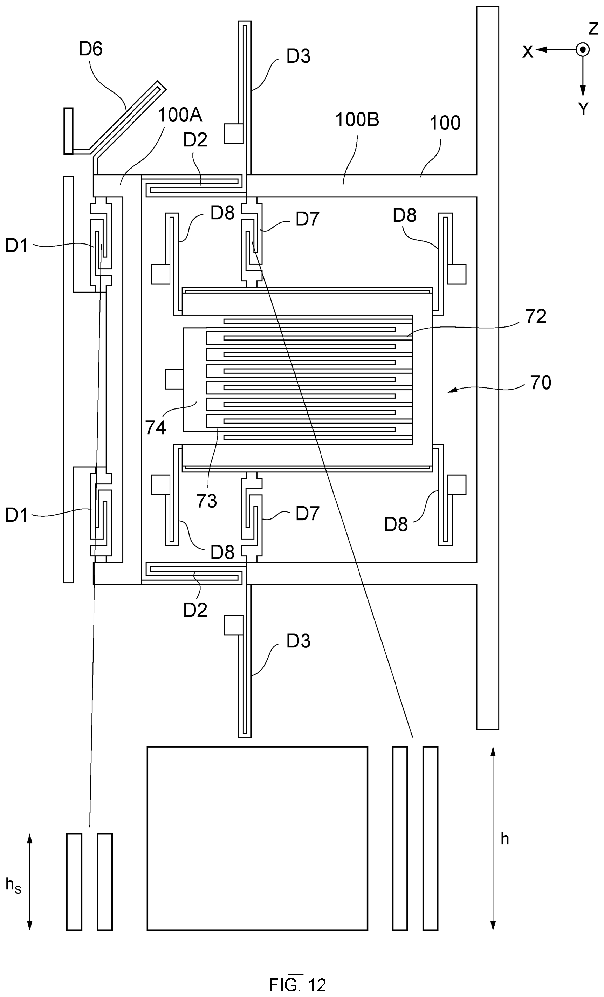

In the aforementioned embodiment, the configuration of the spring D1 and the configuration of the spring D7 may be made different from each other in the first electrode unit 70 as illustrated in Fig. 12. In the example illustrated in Fig. 12, the thickness of the spring D7 in the Z-direction is larger than the thickness of the spring D1 in the Z-direction. In this case, the ratio of the elastic force of the spring D7 in the Y-direction to the elastic force of the spring D7 in the Z-direction is less than the ratio of the elastic force of the spring D1 in the Y-direction to the elastic force of the spring D1 in the Z-direction. This is because the spring constant of each of the springs D1 and D7 is proportional to the cube of the thickness of each of the springs D1 and D7 in the Z-direction, the spring constant of each of the springs D1 and D7 in the Y-direction is proportional to the first power of the thickness of each of the springs D1 and D7 in the Z-direction, and the ratio thereof decreases in proportion to the square of the thickness of each of the springs D1 and D7 in the Z-direction. By thus controlling the ratio of the elastic force of each of the springs D1 and D7 in an in-plane direction and an out-plane direction, it is also possible to improve sensitivity with respect to the displacement of the mass portion 60 in the Z-axis direction while suppressing sensitivity with respect to the displacement of the mass portion 60 in the X-axis direction and the Y-axis direction.

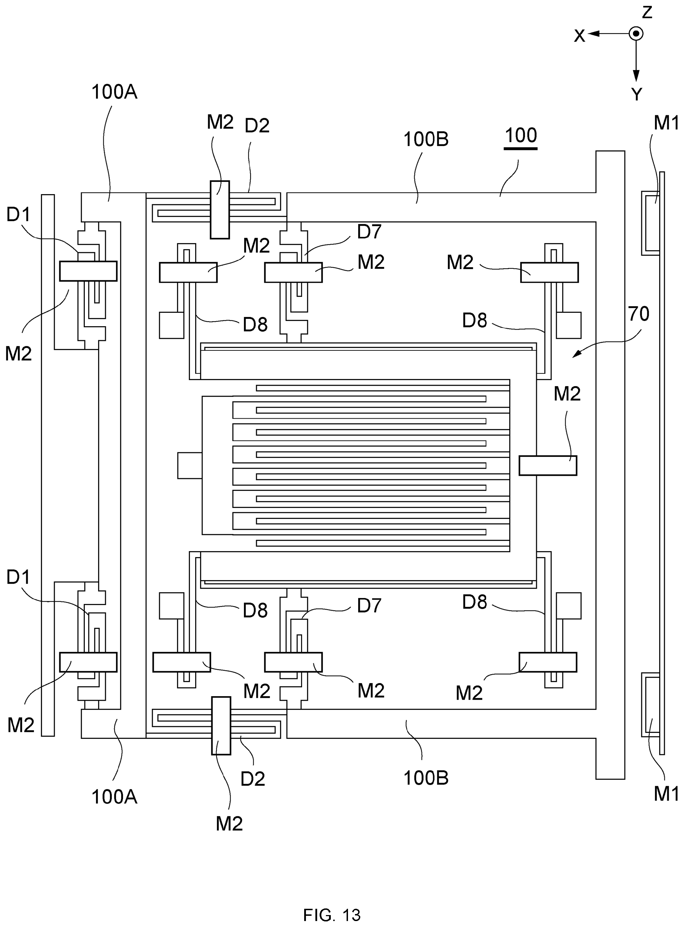

In the aforementioned embodiment, as illustrated in Fig. 13, the first electrode unit 70 may further include a stopper M1, as one example of a restriction portion that restricts displacement of the device layer 30 in a plane extending in the X-axis direction and the Y-axis direction, and a stopper M2, as one example of a restriction portion that restricts displacement of the device layer 30 in the Z-axis direction. The same applies to the second electrode unit 80. In this case, the first electrode unit 70 or the second electrode unit 80 preferably further includes a stiction suppressing portion that suppresses stiction (that is, sticking) with respect to the stopper M1 or M2. The stiction suppressing portion of the first electrode unit 70 or the second electrode unit 80 is, for example, a projecting portion that projects with respect to the stopper M1 or the stopper M2. The area of a leading end of the projecting portion is smaller than the area of a surface of the first electrode unit 70 or the second electrode unit 80 facing the stopper M1 or the stopper M2. Such a projecting portion reduces the area of contact of the first electrode unit 70 or the second electrode unit 80 with the stopper M1 or M2 and thereby suppresses occurrence of sticking. The shape of the projecting portion is not particularly limited and may be, for example, a spherical shape, a columnar shape, a conical shape, a frustum shape, or combinations thereof.

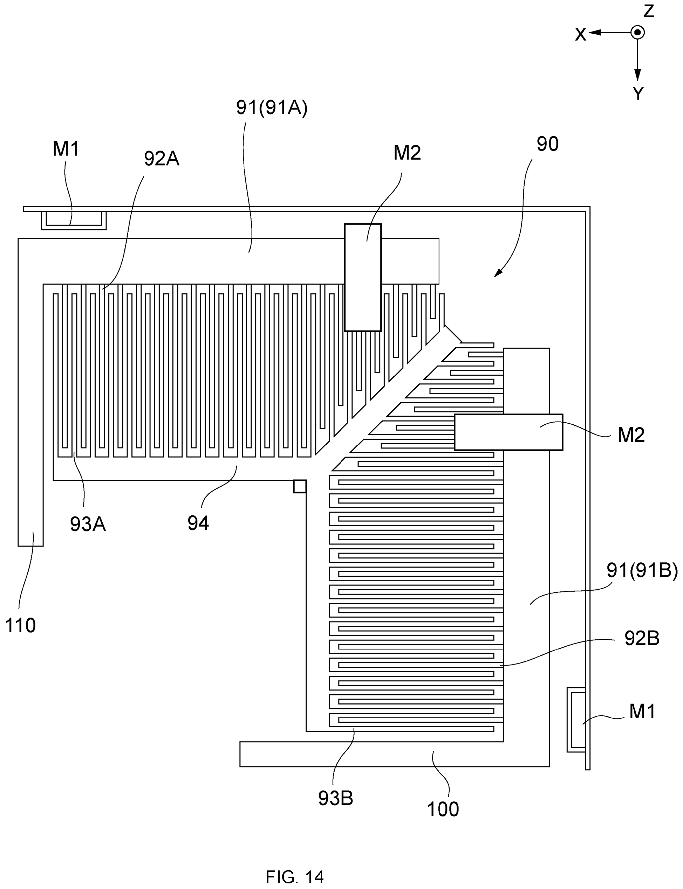

In the aforementioned embodiment, as illustrated in Fig. 14, the third electrode unit 90 may further include a stopper M1, as one example of a restriction portion that restricts displacement of the device layer 30 in a plane extending in the X-axis direction and the Y-axis direction, and a stopper M2, as one example of a restriction portion that restricts displacement of the device layer 30 in the Z-axis direction. In this case, the third electrode unit 90 preferably further includes a stiction suppressing portion that suppresses stiction with respect to the stopper M1 or M2. Similarly to the stiction suppressing portion of the first electrode unit 70 or the second electrode unit 80, the stiction suppressing portion of the third electrode unit 90 is, for example, a projecting portion that projects with respect to the stopper M1 or the stopper M2.

Some or all of embodiments of the present invention are presented below as appendixes. Note that the present invention is not limited to the following appendixes.

<1>

A capacitive sensor that detects, based on a change in electrostatic capacity of an electrode unit constituted by a first comb-tooth structure and a second comb-tooth structure facing the first comb-tooth structure, a force that acts in at least one of a first direction, a second direction intersecting the first direction, and a third direction intersecting both the first direction and the second direction, the capacitive sensor including:

a first substrate layer in which a thickness direction is the third direction, the first substrate layer including a boss portion that receives a force that acts in the at least one direction; and
a second substrate layer in which a thickness direction is the third direction, the second substrate layer including a mass portion to which a force that acts in the at least one direction is transmitted from the boss portion, a movable electrode that has the first comb-tooth structure and that is displaced in conjunction with the mass portion, and a fixed electrode that has the second comb-tooth structure.

<2>

The capacitive sensor according to <1>,
in which the capacitive sensor detects a force that acts in the at least one direction, based on a change in electrostatic capacity of the electrode unit, the change being associated with a change in a facing area between the first comb-tooth structure and the second comb-tooth structure.

<3>

The capacitive sensor according to <2>,
in which the electrode unit includes

a first electrode unit in which a facing area between the first comb-tooth structure and the second comb-tooth structure changes in response to displacement of the mass portion in the first direction,
a second electrode unit in which a facing area between the first comb-tooth structure and the second comb-tooth structure changes in response to displacement of the mass portion in the second direction, and
a third electrode unit in which a facing area between the first comb-tooth structure and the second comb-tooth structure changes in response to displacement of the mass portion in the third direction.

<4>

The capacitive sensor according to <3>,
in which the first electrode unit is provided on each of one side and another side in the first direction with respect to the mass portion so as to form a pair,
in which the second electrode unit is provided on each of one side and another side in the second direction with respect to the mass portion so as to form a pair, and
in which the capacitive sensor further includes a coupling portion that couples adjacent electrode units among one pair of the first electrode units and one pair of the second electrode units.

<5>

The capacitive sensor according to <3> or <4>,
in which the third electrode unit is divided into a plurality of electrode units, and
in which each of a plurality of divided electrode units of the third electrode unit detects a magnitude of a force that acts on the boss portion in the third direction, based on a change in electrostatic capacity of each of a plurality of divided electrode units of the third electrode unit, the change being associated with a change in a facing area between the first comb-tooth structure and the second comb-tooth structure.

<6>

The capacitive sensor according to <5>,
in which a plurality of divided electrode units of the third electrode unit are configured such that thicknesses of the movable electrodes are different from each other.

<7>
The capacitive sensor according to any one of <3> to <6>, further including:

a first elastic portion that couples the mass portion and the first electrode unit in a form in which displacement in the first direction is restricted and in which displacement in the second direction is allowed;
a second elastic portion that couples the mass portion and the second electrode unit in a form in which displacement in the second direction is restricted and in which displacement in the first direction is allowed; and
a third elastic portion that couples the mass portion and the third electrode unit in a form in which displacement in the first direction and the second direction is restricted and in which rotation about an axis that extends in a plane extending in the first direction and the second direction is allowed.

<8>

The capacitive sensor according to <7>,
in which the first elastic portion, the second elastic portion, and the third elastic portion are each provided at a respective one of a plurality of positions in or on the second substrate layer, and
in which the first elastic portion, the second elastic portion, and the third elastic portion provided at respective positions are configured to have different thicknesses from each other.

<9>
The capacitive sensor according to any one of <1> to <8>, further including:
a restriction portion that restricts at least one of displacement of the second substrate layer in a plane extending in the first direction and the second direction and displacement of the second substrate layer in the third direction.
<10>

The capacitive sensor according to <9>,

in which the second substrate layer further includes a stiction suppressing portion that suppresses stiction with respect to the restriction portion.

As described above, according to one aspect of the present invention, it is possible to provide a capacitive sensor capable of increasing sensitivity in detection of a force that acts from outside while ensuring mechanical strength.

Note that each embodiment described above is for ease of understanding of the present invention and is not for interpreting the present invention in a limited manner. The present invention can be changed/improved without departing from the gist thereof, and the present invention includes equivalents thereof. That is, each embodiment to which a design change has been added by a person skilled in the art is also included in the scope of the present invention as long as features of the present invention are included. For example, components included in the embodiments and arrangements, materials, conditions, shapes, sizes, and the like of the components are not limited to those that are presented as exemplified and may be changed as appropriate. In addition, it is needless to say that the embodiments are exemplary and that partial replacement or combination of configurations described in different embodiments are possible, and these are also included in the scope of the present invention as long as features of the present invention are included.

Reference Signs List

| 10 | capacitive sensor |
| 20 | lower cover |
| 30 | device layer |
| 40 | upper cover |
| 40A | boss portion |
| 60 | mass portion |
| 70 | first electrode unit |
| 80 | second electrode unit |
| 90 | third electrode unit |

**Claims**

1. A capacitive sensor that detects, based on a change in electrostatic capacity of an electrode unit constituted by a first comb-tooth structure and a second comb-tooth structure facing the first comb-tooth structure, a force that acts in at least one of a first direction, a second direction intersecting the first direction, and a third direction intersecting both the first direction and the second direction, the capacitive sensor comprising:

   a first substrate layer in which a thickness direction is the third direction, the first substrate layer including a boss portion that receives a force that acts in the at least one direction and being deformed by bending due to a force that acts on the boss portion; and
   a second substrate layer in which a thickness direction is the third direction, the second substrate layer including a mass portion to which a force that acts in the at least one direction is transmitted from the boss portion, a movable electrode that has the first comb-tooth structure and that is displaced in conjunction with the mass portion, and a fixed electrode that has the second comb-tooth structure.

2. The capacitive sensor according to claim 1,
   wherein the capacitive sensor detects a force that acts in the at least one direction, based on a change in electrostatic capacity of the electrode unit, the change being associated with a change in a facing area between the first comb-tooth structure and the second comb-tooth structure.

3. The capacitive sensor according to claim 2,
   wherein the electrode unit includes

   a first electrode unit in which a facing area between the first comb-tooth structure and the second comb-tooth structure changes in response to displacement of the mass portion in the first direction,
   a second electrode unit in which a facing area between the first comb-tooth structure and the second comb-tooth structure changes in response to displacement of the mass portion in the second direction, and
   a third electrode unit in which a facing area between the first comb-tooth structure and the second comb-tooth structure changes in response to displacement of the mass portion in the third direction.

4. The capacitive sensor according to claim 3,

> wherein the first electrode unit is provided on each of one side and another side in the first direction with respect to the mass portion so as to form a pair,
> wherein the second electrode unit is provided on each of one side and another side in the second direction with respect to the mass portion so as to form a pair, and
> wherein the capacitive sensor further comprises a coupling portion that couples adjacent electrode units among one pair of the first electrode units and one pair of the second electrode units.

5. The capacitive sensor according to claim 3 or 4,

> wherein the third electrode unit is divided into a plurality of electrode units, and
> wherein each of a plurality of divided electrode units of the third electrode unit detects a magnitude of a force that acts on the boss portion in the third direction, based on a change in electrostatic capacity of each of a plurality of divided electrode units of the third electrode unit, the change being associated with a change in a facing area between the first comb-tooth structure and the second comb-tooth structure.

6. The capacitive sensor according to claim 5,
wherein a plurality of divided electrode units of the third electrode unit are configured such that thicknesses of the movable electrodes are different from each other.

7. The capacitive sensor according to any one of claims 3 to 6, further comprising:

> a first elastic portion that couples the mass portion and the first electrode unit in a form in which displacement in the first direction is restricted and in which displacement in the second direction is allowed;
> a second elastic portion that couples the mass portion and the second electrode unit in a form in which displacement in the second direction is restricted and in which displacement in the first direction is allowed; and
> a third elastic portion that couples the mass portion and the third electrode unit in a form in which displacement in the first direction and the second direction is restricted and in which rotation about an axis that extends in a plane extending in the first direction and the second direction is allowed.

8. The capacitive sensor according to claim 7,

> wherein the first elastic portion, the second elastic portion, and the third elastic portion are each provided at a respective one of a plurality of positions in or on the second substrate layer, and
> wherein the first elastic portion, the second elastic portion, and the third elastic portion provided at respective positions are configured to have different thicknesses from each other.

9. The capacitive sensor according to any one of claims 1 to 8, further comprising:
a restriction portion that restricts at least one of displacement of the second substrate layer in a plane extending in the first direction and the second direction and displacement of the second substrate layer in the third direction.

10. The capacitive sensor according to claim 9,
wherein the second substrate layer further includes a stiction suppressing portion that suppresses stiction with respect to the restriction portion.

FIG. 1

FIG. 2

FIG. 3

Δx

73

72

L

FIG. 4

FIG. 5

FIG. 6

(A)

(B)

FIG. 7

EP 4 756 392 A1

FIG. 8

EP 4 756 392 A1

$F_Z$

40A

40
S1
30
S2
50
20

50B

TRANSLATIONAL COMPONENT

Z

X

ROTATIONAL COMPONENT

Z

X

$F_Z$

(A)

(B)

FIG. 9

FIG. 10

FIG. 11

FIG. 12

FIG. 13

FIG. 14

# EP 4 756 392 A1

## INTERNATIONAL SEARCH REPORT

International application No.

**PCT/JP2024/029035**

| A. | CLASSIFICATION OF SUBJECT MATTER |
|---|---|

*G01L 5/165*(2020.01)i
FI: G01L5/165

According to International Patent Classification (IPC) or to both national classification and IPC

| B. | FIELDS SEARCHED |
|---|---|

Minimum documentation searched (classification system followed by classification symbols)

G01L1/00-1/26; G01L5/00-5/28; H01L29/84

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | US 2016/0060098 A1 (KABUSHIKI KAISHA TOSHIBA) 03 March 2016 (2016-03-03) paragraphs [0017]-[0039], fig. 1-3 | 1, 2, 9, 10 |
| A | | 3-8 |
| Y | JP 2007-10379 A (HONDA MOTOR CO., LTD.) 18 January 2007 (2007-01-18) paragraphs [0041]-[0045], fig. 1 | 1, 2, 9, 10 |
| A | US 2015/0217123 A1 (DETERRE et al.) 06 August 2015 (2015-08-06) paragraphs [0055]-[0066], fig. 5a-6 | 1-10 |
| A | JP 2023-127143 A (TOHOKU UNIVERSITY) 13 September 2023 (2023-09-13) paragraphs [0075]-[0085], fig. 17, 18 | 1-10 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **23 October 2024** | **05 November 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/029035**

| Patent document cited in search report | | | Publication date (day/month/year) | Patent family member(s) | | | Publication date (day/month/year) |
|---|---|---|---|---|---|---|---|
| US | 2016/0060098 | A1 | 03 March 2016 | (Family: none) | | | |
| JP | 2007-10379 | A | 18 January 2007 | US | 2009/0301226 | A1 | |
| | | | | paragraphs [0079]-[0083], fig. 1 | | | |
| | | | | EP | 1739401 | A1 | |
| US | 2015/0217123 | A1 | 06 August 2015 | EP | 2520333 | A1 | |
| JP | 2023-127143 | A | 13 September 2023 | (Family: none) | | | |

Form PCT/ISA/210 (patent family annex) (July 2022)

**EP 4 756 392 A1**

**Patent documents cited in the description**

- JP 2017152578 A